(19) Europäisches Patentamt
European Patent Office
Office européen des brevets

(11) **EP 3 039 394 B1**

(12) **EUROPÄISCHE PATENTSCHRIFT**

(45) Veröffentlichungstag und Bekanntmachung des Hinweises auf die Patenterteilung:
**10.10.2018  Patentblatt 2018/41**

(21) Anmeldenummer: **14757873.6**

(22) Anmeldetag: **18.08.2014**

(51) Int Cl.:
***G01M 3/32*** *(2006.01)*

(86) Internationale Anmeldenummer:
**PCT/EP2014/067591**

(87) Internationale Veröffentlichungsnummer:
**WO 2015/028338 (05.03.2015 Gazette 2015/09)**

(54) **DICHTHEITSPRÜFUNG WÄHREND DER EVAKUIERUNG EINER FOLIENKAMMER**

TIGHTNESS TEST DURING THE EVACUATION OF A FILM CHAMBER

CONTRÔLE D'ÉTANCHÉITÉ PENDANT LA MISE SOUS VIDE D'UNE CHAMBRE FORMÉE PAR UN FILM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2013  DE 102013217288**

(43) Veröffentlichungstag der Anmeldung:
**06.07.2016  Patentblatt 2016/27**

(73) Patentinhaber: **Inficon GmbH**
**50968 Köln (DE)**

(72) Erfinder:
• **WETZIG, Daniel**
**50999 Köln (DE)**
• **DECKER, Silvio**
**50999 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**US-A- 3 813 923        US-A- 3 818 752**
**US-A1- 2001 003 917    US-B1- 6 732 571**

**Beschreibung**

Die Erfindung betrifft ein Verfahren zur Prüfung der Dichtheit eines ein Gas enthaltenden Prüflings in einer Folienkammer aus einem flexiblen Material.

Folienkammern sind Prüfkammern zur Dichtheitsprüfung von Prüflingen, wie zum Beispiel Lebensmittelverpackungen oder anderen flexiblen Verpackungen. Eine Folienkammer besteht dabei zumindest zu einem Teil aus einem weichen, flexiblen Material, welches sich bei der Evakuierung der Folienkammer an den in der Folienkammer enthaltenen Prüfling anschmiegt. Dabei wird ein Vakuum innerhalb der Folienkammer in der Umgebung des Prüflings erzeugt. Dieses Vakuum treibt ein in dem Prüfling enthaltenes Füllgas durch mögliche Undichtigkeiten in die äußere Umgebung des Prüflings innerhalb der Folienkammer. Der atmosphärische Druck außerhalb der Folienkammer verhindert dabei, dass der Innendruck des Prüflings den Prüfling in dem Vakuum platzen lässt.

Zur Prüfung der Dichtheit eines Prüflings in einer Folienkammer sind herkömmlicherweise zwei alternative Verfahren bekannt. Bei dem einen Verfahren wird dem Füllgas des Prüflings ein Prüfgas hinzugefügt und der Prüfgaspartialdruck im Gasstrom des Vakuumsystems der Folienkammer gemessen. Der Prüfgaspartialdruck dient dabei als Maß für die Leckrate.

Das andere Prüfverfahren ist füllgasunabhängig. Die Folienkammer wird in einem ersten Schritt zunächst evakuiert und anschließend wird das Ventil zu dem Vakuumpumpsystem verschlossen. Sodann wird in einem zweiten Schritt der zeitliche Verlauf des Druckanstiegs innerhalb der Folienkammer und außerhalb des Prüflings gemessen. Dieser Druckanstieg dient als Maß für die Leckrate des Prüflings. Dieses Verfahren ist aufgrund der beiden nacheinander durchzuführenden Schritte "Evakuieren" und "Druckmessung" für die industrielle Dichtheitsprüfung von Nachteil, weil dort kurze Taktraten bei der Dichtheitsprüfung erforderlich sind. Ein weiterer Nachteil besteht darin, dass bei grober Undichtigkeit des Prüflings das Füllgas bereits während der Evakuierungsphase mit aus dem Prüfling herausgepumpt wird. Nach der Evakuierung ist somit auch der Prüfling evakuiert und wird während der Druckmessungsphase fälschlicherweise als dicht eingestuft.

US 3,813,923 beschreibt eine Anordnung eines auf Dichtheit zu überprüfenden Containers innerhalb einer evakuierten Prüfkammer mit flexiblen Membranen als Wenden, wobei an die Prüfkammer ein Flusssensor angeschlossen ist.

US 6,732,571 B1 beschreibt ein Verfahren, bei dem ein auf Dichtheit zu prüfendes Objekt in einer evakuierten Folienkammer angeordnet ist, wobei aus dem Prüfling in die Folienkammer gelangendes Gas einem Massenspektrometer zugeführt wird.

Der Erfindung liegt die Aufgabe zugrunde, ein verbessertes Verfahren zur Prüfung der Dichtheit eines Prüflings in einer Folienkammer zu schaffen.

Das erfindungsgemäße Prüfverfahren ist definiert durch Anspruch 1. Demnach wird der von der Vakuumpumpe generierte Gasfluss aus der Folienkammer bereits während der Evakuierung gemessen und bereits während der Evakuierung im Hinblick auf ein mögliches Leck des Prüflings untersucht. Das bislang nach der Evakuierung erfolgende Messen des Drucks während der Akkumulation des aus einem möglichen Leck aus dem Prüfling ausströmenden Gases kann dabei entfallen. Vorzugsweise wird der während der Evakuierung gemessene Gasfluss mit dem Verlauf des Gasflusses im Fall eines dichten Prüflings verglichen. Der Gasfluss im Fall eines dichten Prüflings dient dabei als Referenzgasfluss. Dieser Referenzgasfluss kann vor der eigentlichen Druckmessung gemessen und gespeichert werden. Die Leckrate des Prüflings kann dann durch Subtraktion des Referenzgasflusses von dem gemessenen Gasfluss ermittelt werden.

Die Messung kann mit einem Flusssensor im Abgasstrom der Vakuumpumpe erfolgen oder alternativ mit einem Differenzdrucksensor an einer Drosselstelle, die in dem Rohrleitungssystem angeordnet ist, welches die Folienkammer und die Vakuumpumpe verbindet, um die Folienkammer durch die Vakuumpumpe zu evakuieren.

Vor der Messung sollte das Verhältnis aus der Gasmenge in der Folienkammer außerhalb des Prüflings und der Gasmenge innerhalb des Prüflings reduziert werden, zum Beispiel in dem das Folienkammervolumen an das Volumen des Prüflings angepasst wird.

Im Folgenden werden anhand der Figuren Ausführungsbeispiele der Erfindung näher erläutert. Es zeigen:

Fig. 1    ein erstes Ausführungsbeispiel,

Fig. 2    ein zweites Ausführungsbeispiel,

Fig. 3    ein drittes Ausführungsbeispiel,

Fig. 4    ein viertes Ausführungsbeispiel,

Fig. 5    ein fünftes Ausführungsbeispiel und

Fig. 6    ein sechstes Ausführungsbeispiel.

Bei allen Ausführungsbeispielen ist die Folienkammer 12 aus zwei flexiblen Folien 14, 16 gebildet, die den Prüfling 18 umschließen und im Bereich ihres den Prüfling 18 umgebenden Randes 20 mit einem O-Ring 22 versehen sind. Der O-Ring 22 liegt dichtend zwischen beiden Folien 14, 16 an diesen an und verhindert, dass Gas in die Folienkammer 12 durch den Randbereich 20 der beiden Folien 14, 16 hineinströmen kann. Die untere Folie 16 weist einen Anschluss 24 für eine Gas leitende Rohrleitung 26 auf, die mit einer Vakuumpumpe 28 verbunden ist, um die Folienkammer 12 zu evakuieren.

Bei dem Prüfling 18 handelt es sich typischerweise um eine flexible Lebensmittelverpackung, die zur Vereinfachung in den Figuren oval dargestellt ist. Der Prüfling 18 ist mit einem Füllgas gefüllt und die Folienkammer 12 ist bezüglich ihres Volumens an das Volumen des Prüflings 18 angepasst. Das heißt, dass das in der Folienkammer 12 außerhalb des Prüflings 18 verbleibende Volumen gering ist.

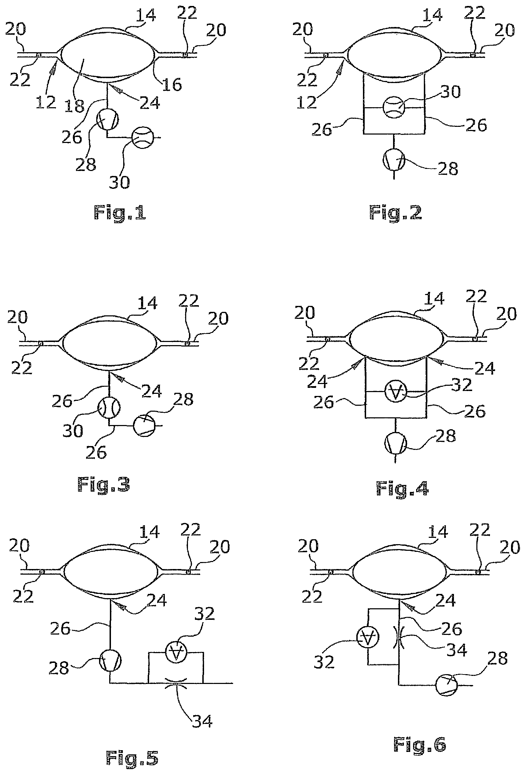

In Figur 1 ist der Vakuumpumpe 28 ein Flusssensor 30 nachgeschaltet, um den Gasfluss in dem Abgasstrom der Vakuumpumpe 28 zu messen. In Figur 2 ist der Flusssensor 30 in dem die Folienkammer 12 und die Vakuumpumpe 28 verbindenden Rohrleitungssystem 26 parallel zu der Vakuumpumpe 28 geschaltet. In Figur 3 ist der Flusssensor 30 in dem die Folienkammer 12 mit der Vakuumpumpe 28 verbindenden Rohrleitungssystem 26 in Serie zu der Vakuumpumpe 28 geschaltet. Der Flusssensor 30 befindet sich dann genau zwischen der Folienkammer 12 und der Vakuumpumpe 28. In Figur 4 ist ein Drucksensor 32 in dem die Folienkammer 12 und die Vakuumpumpe 28 verbindenden Rohrleitungssystem 26 parallel zu der Vakuumpumpe 28 geschaltet. Das Ausführungsbeispiel nach Figur 4 entspricht bis auf den Flusssensor 30 dem Ausführungsbeispiel nach Figur 2.

Bei dem Ausführungsbeispiel nach Figur 5 ist der Drucksensor der Vakuumpumpe 28 nachgeschaltet und bei dem Ausführungsbeispiel nach Figur 6 in dem die Folienkammer 12 und die Vakuumpumpe 28 verbindenden Rohrleitungssystem enthalten. Dabei ist bei den Ausführungsbeispielen nach den Figuren 5 und 6 der Drucksensor 32 jeweils parallel zu einer Drosselstelle 34 geschaltet um den Druckabfall über der Drosselstelle 34 zu messen.

Allen Ausführungsbeispielen ist gemeinsam, dass die Messung des Gasflusses, also entweder mit dem Flusssensor 30 oder mit dem Drucksensor 32, bereits während der Evakuierung der Folienkammer 12 mit der Vakuumpumpe 28 erfolgt. Der Unterschied zu dem herkömmlichen Prüfverfahren nach der Druckanstiegsmethode besteht also darin, dass die Messung nicht erst in einem separaten Schritt nach der Evakuierung erfolgt. Der Zeitaufwand für die Prüfung der Dichtheit des Prüflings 18 ist dadurch erheblich reduziert. In sämtlichen Ausführungsbeispielen setzt sich der gesamte Gasfluss $Q_{Gesamt}$, der während des Prüfverfahrens aus der Folienkammer 12 herausgepumpt wird, aus der Gasmenge $Q_{Kammer}$ aus der Folienkammer 12 außerhalb des Prüflings 18 und der Gasmenge $Q_{Leck}$ aus dem Prüfling 18 zusammen:

$$(1) \quad Q_{Gesamt} = Q_{Kammer}(t) + Q_{Leck}(p,t)$$

Der zeitliche Verlauf dieser beiden Teilflüsse ist von dem Druck innerhalb der Folienkammer 12 abhängig. Zu Beginn des Pumpens mit der Vakuumpumpe 28 wird zunächst nur das Gas aus der Folienkammer 12 außerhalb des Prüflings 18 zu der Vakuumpumpe 28 strömen:

$$(2) \quad Q_{Kammer} = S \times \Delta p_{Kammer}$$

S: Saugvermögen an der Folienkammer

Aus dem Prüfling 18 strömt zu diesem Zeitpunkt, das heißt zu Beginn des Abpumpens, noch kein Gas, weil noch keine ausreichend treibende Kraft in Form einer Druckdifferenz $\Delta p_{Prüfling}$ zwischen dem Druck innerhalb des Prüflings 18 und dem Druck in der Umgebung des Prüflings 18 innerhalb der Folienkammer 12 herrscht:

$$\Delta P_{Prüfling} = 0,$$

wobei

$$(3) \quad Q_{Leck} = L \times \Delta p_{Prüfling}$$

L: Leitwert des Leckkanals am Prüfling
mit der Abnahme des Drucks $p_1$ innerhalb der Folienkammer 12 außerhalb des Prüflings 18 nimmt die treibende Kraft auf das Leck in dem Prüfling 18 zu, so dass auch die Leckrate zunimmt. Bei großen Leckagen an dem Prüfling 18 und geringer Gasmenge innerhalb des Prüflings 18 sinkt der Druck $p_2$ auch innerhalb des Prüflings, weil auch das Gas aus dem Prüfling mit von der Vakuumpumpe 28 abgepumpt wird. Der Prüfling wird dann leer gepumpt und der Leckgasstrom versiegt. In diesem Zustand wurde ein Prüfling nach dem herkömmlichen Verfahren zur Druckanstiegsmessung fälschlicherweise als dicht erkannt.

Allgemein gilt dabei:

$$\Delta p_{Kammer} = p_1 - p_0,$$

$$\Delta p_{Prüfling} = p_2 - p_1,$$

$P_0$ = Druck am Kammeranschlussflansch (Pumpstutzen),

$P_1$ = Druck in der Folienkammer 12 außerhalb des Prüflings 18 und

$P_2$ = Druck innerhalb des Prüflings 18.

Damit das Flusssignal der Leckrate verglichen zu dem Fluss aus der Folienkammer 12 groß wird, muss das Verhältnis aus der Gasmenge in der Prüfkammer 12 außerhalb des Prüflings 18 und der Gasmenge innerhalb des Prüflings 18 zu Beginn des Prozesses möglichst gering sein. Dies kann über die Anpassung des Prüfvolumens der Folienkammer 12 an den Prüfling 18 erreicht werden. Das Volumen der Folienkammer 12 wird dabei so gering wie möglich gehalten. Die Größe des Prüflings 18 gibt dabei den notwendigen Folienkammerdurchmesser vor. Der Druck in der Folienkammer 12 außerhalb des Prüflings 18 sinkt dann vergleichsweise schnell ab und der Fluss aus dem Prüfling 18 kann frühzeitig gemessen werden.

Während bei der Leckagemessung nach dem Druckanstiegsverfahren, bei dem der Druckanstieg in der Folienkammer 12 außerhalb des Prüflings 18 gemessen wird (1. Phase: Abpumpen, 2. Phase: Akkumulieren und Druck messen), erfolgt die Leckmessung nach dem erfindungsgemäßen Verfahren direkt in der ersten und einzigen Phase (Abpumpen). Die Zeit pro Prüfzyklus ist dadurch reduziert.

**Patentansprüche**

1. Verfahren zur Prüfung der Dichtheit eines ein Gas enthaltenden Prüflings (18) in einer Folienkammer (12) aus einem flexiblen Material, wobei die Folienkammer (12) von einer Vakuumpumpe (28) evakuiert wird, wobei der von der Vakuumpumpe (28) generierte Gasfluss aus der Folienkammer (12) während der Evakuierung gemessen und im Hinblick auf ein mögliches Leck des Prüflings (18) untersucht wird,
   **dadurch gekennzeichnet, dass**
   der Verlauf des gemessenen Gasflusses mit dem Verlauf eines Referenzgasflusses, nämlich dem Gasfluss bei dichtem Prüfling (18), verglichen wird.

2. Verfahren nach Anspruch 1, **dadurch gekennzeichnet, dass** der Verlauf des Referenzgasflusses zuvor gemessen und gespeichert wird.

3. Verfahren nach Anspruch 1 oder 2, **dadurch gekennzeichnet, dass** die Leckrate durch Subtraktion des Referenzgasflusses von dem gemessenen Gasfluss bestimmt wird.

4. Verfahren nach einem der vorhergehenden Ansprüche, **dadurch gekennzeichnet, dass** die Messung mit einem Flusssensor (30), beispielsweise in dem Abgasstrom der Vakuumpumpe (28), erfolgt.

5. Verfahren nach einem der Ansprüche 1-3, **dadurch gekennzeichnet, dass** die Messung an einer Drosselstelle (34) eines Gasführungssystems, beispielsweise eines die Folienkammer (12) und die Vakuumpumpe (28) verbindenden Rohrleitungssystems (26), erfolgt.

6. Verfahren nach einem der Ansprüche 1-3, **dadurch gekennzeichnet, dass** der Fluss von einer Abpumpleitung zu einer anderen Abpumpleitung während der Evakuierungsphase gemessen und als Maß für die Leckrate aus dem Prüfling verwendet wird.

7. Verfahren nach einem der Ansprüche 1-3, **dadurch gekennzeichnet, dass** die Druckdifferenz zwischen zwei Abpumpleitungen während der Evakuierungsphase als Maß für die Leckrate aus dem Prüfling verwendet wird.

8. Verfahren nach einem der vorhergehenden Ansprüche, **dadurch gekennzeichnet, dass** vor der Messung das Verhältnis aus der Gasmenge in der Folienkammer (12) außerhalb des Prüflings (18) und der Gasmenge innerhalb des Prüflings (18) reduziert wird.

**Claims**

1. A method for testing the sealing tightness of a specimen (18) containing a gas, in a film chamber (12) made from flexible material, the film chamber (12) being evacuated by a vacuum pump (28), wherein the gas flow flowing out from the film chamber (12) and generated by the vacuum pump (28) is measured during the evacuation and is examined with respect to a possible leak of the specimen (18),
   **characterized in that**
   the course of the gas flow measured is compared with the course of a reference gas flow, i.e. the gas flow for a tight specimen (18).

2. The method of claim 1, **characterized in that** the course of the reference gas flow is measured and stored in advance.

3. The method of claim 1 or 2, **characterized in that** the leakage rate is determined by subtracting the reference gas flow from the measured gas flow.

4. The method of one of the preceding claims, **characterized in that** the measurement is made using a flow sensor (30) situated for example in the exhaust gas flow of the vacuum pump (28).

5. The method of one of claims 1-3, **characterized in that** the measurement is performed at a throttle point (34) of a gas-carrying system, for example of a pipe system (26) connecting the film camber (12) and the vacuum pump (28).

6. The method of one of claims 1-3, **characterized in that** the flow from one pump-off line to another is measured during the evacuation phase and is used as a measure for the leakage rate from the specimen.

**7.** The method of one of claims 1-3, **characterized in that** the pressure difference between two pump-off lines during the evacuation phase is used as a measure for the leakage rate from the specimen.

**8.** The method of one of the preceding claims, **characterized in that** prior to measurement, the ratio of the gas quantity in the film chamber (12) outside the specimen (18) and the gas quantity inside the specimen (18) is reduced.


## Revendications

**1.** Procédé de test de l'étanchéité d'un échantillon (18), contenant un gaz, dans une chambre à film (12) en matière souple, la chambre à film (12) étant mise sous vide par une pompe à vide (28), le flux de gaz sortant de la chambre de film (12) et généré par la pompe à vide (28) étant mesuré pendant la mise sous vide et une recherche d'une fuite éventuelle de l'échantillon (18) étant effectuée,
**caractérisé en ce que**
la variation du flux de gaz mesuré est comparée à la variation d'un flux de gaz de référence, à savoir le flux de gaz dans le cas d'un échantillon étanche (18).

**2.** Procédé selon la revendication 1, **caractérisé en ce que** la variation du flux de gaz de référence est préalablement mesurée et mémorisée.

**3.** Procédé selon la revendication 1 ou 2, **caractérisé en ce que** le débit de fuite est déterminé par soustraction du flux de gaz de référence du flux de gaz mesuré.

**4.** Procédé selon l'une des revendications précédentes, **caractérisé en ce que** la mesure est effectuée avec un capteur de débit (30), placé par exemple dans le flux de gaz de sortie de la pompe à vide (28).

**5.** Procédé selon l'une des revendications 1 à 3, **caractérisé en ce que** la mesure est effectuée à un point d'étranglement (34) d'un système de guidage de gaz, par exemple d'un système de canalisation (26) reliant la chambre à film (12) et la pompe à vide (28).

**6.** Procédé selon l'une des revendications 1 à 3, **caractérisé en ce que** le flux allant d'une canalisation de mise sous vide à une autre canalisation de mise sous vide est mesuré pendant la phase de mise sous vide et est utilisé comme mesure du débit de fuite de l'échantillon.

**7.** Procédé selon l'une des revendications 1 à 3, **caractérisé en ce que** la différence de pression entre deux canalisations de mise sous vide est utilisée pendant la phase de mise sous vide comme mesure du débit de fuite de l'échantillon.

**8.** Procédé selon l'une des revendications précédentes, **caractérisé en ce que**, avant la mesure, le rapport entre la quantité de gaz dans la chambre à film (12) à l'extérieur de l'échantillon (18) et la quantité de gaz à l'intérieur de l'échantillon (18) est réduit.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3813923 A

- US 6732571 B1